# EUROPEAN PATENT APPLICATION

(11) **EP 2 635 063 A1**
(43) Date of publication of application: **04.09.2013**
(21) Application number: 12360013.2
(22) Date of filing: 01.03.2012
(51) Int. Cl.: H04W 16/24, H04W 16/28

(54) **Radio cells with angularly shifted beam patterns**

(71) Applicant: Alcatel Lucent, 75007 Paris (FR)
(72) Inventor: Claussen, Holger, Straffan Co Kildare (IE); Ho, Lester, Swindon Wiltshire SN5 5GD (GB)
(74) Representative: Script IP Limited

(57) **Abstract**

A wireless telecommunication base station operable to provide a region of radio coverage within a wireless telecommunication network. The base station comprises: transmission apparatus operable to provide a first region of radio coverage on a first radio frequency and a second region of radio coverage on a second radio frequency. The first region of radio coverage comprises a plurality of angularly spaced first radio beams. The second region of radio coverage comprises at least a second radio beam. The second radio beam is arranged to radiate from the base station between adjacent angularly spaced first radio beams. It will be understood that aspects described provide a novel method for configuring sectors in a multi-carrier cellular network. Such an approach minimises or removes a poor signal to interference and noise ratio region between sectors and acts to significantly improve edge signal to interference and noise ratio whilst maintaining full frequency re-use. The concept is also applicable to OFDM systems such as LTE.

## Description

### FIELD OF THE INVENTION

The present invention relates to a telecommunication base station and a method of operation of a telecommunication base station.

### BACKGROUND

Wireless telecommunication systems are known. In such systems, mobile communication devices (for example, mobile telephones) are operable to communicate with base stations provided by network providers.

In known wireless telecommunication systems, radio coverage is provided to network connectable devices, such as mobile telephones, or wireless devices such as iPads or other similar tablets, according to areas known as cells. A base station is located in each cell to provide radio coverage. Typically, network connectable devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

One problem in cellular networks is uneven distribution of signal to interference and noise ratio within a cell as a result of the frequency reuse between sectors and between base stations. Such an uneven distribution of signal to interference and noise ratio can lead to very high data rates in the centre of a cell, but very poor data rates at the cell edge and between sectors supported by a base station. LTE (also known as 4G) network architecture can address uneven distribution of signal to interference and noise ratio to some extent by employing interference coordination techniques which reduces the spatial frequency reuse. According to such techniques, parts of available sub-carriers are reserved for edge users and thus those edge users have increased signal to interference and noise ratios. A drawback of such an arrangement is that the frequency re-use is reduced and overall capacity within the network is therefore sacrificed.

It is desired to improve the configuration of cells within a wireless communication network.

### SUMMARY

Accordingly, a first aspect provides a wireless telecommunication base station operable to provide a region of radio coverage within a wireless telecommunication network, the base station comprising: transmission apparatus operable to provide a first region of radio coverage on a first radio frequency and a second region of radio coverage on a second radio frequency, the first region of radio coverage comprising a plurality of angularly spaced first radio beams; the second region of radio coverage comprising at least a second radio beam; the second radio beam being arranged to radiate from the base station between adjacent angularly spaced first radio beams.

The first aspect recognises that one issue in cellular networks is an uneven distribution of signal to interference and noise ratio across a cell. Cells are supported by base stations in a manner which leads to very high data rates being achievable in a cell centre, but very poor data rates at a cell edge and between sectors of a cell.

Aspects described herein recognise that if multiple carriers, or non-overlapping portions of radio frequency band, are available at a base station, which is often the case in most areas and for most operators, an alternative cell configuration may be implemented which may significantly improve cell edge data rates and overall data rates.

For a multi-sector macro cell, aspects provide a second carrier, the sectors of which are shifted such that they point towards an area of poor performance in a first carrier, for example, those sectors are radially shifted so that they radiate "between" sectors of the first carrier. In the case of a three sector macro cell, it may be, for example, that main beams, or beam patterns, supporting the sectors of radio coverage on the second carrier are shifted by 60° with respect to the beam patterns supporting the sectors of coverage on the first carrier. Such a shift in sectors may require modified antennas, but the cost increase is small compared to resulting benefits. As a result of shifting the beam pattern of a second carrier in relation to a first carrier, regions of poor signal to interference and noise ratio, both between the sectors and at cell edges of a particular base station, are arranged such that they are no longer co-located in comparison to a typical co-located carrier deployment. In other words, the regions of poor coverage in each carrier no longer overlap.

It will be appreciated that "sectors" of coverage are supported by a radio beam pattern. That beam pattern will typically comprise a main directional beam which radiates from a base station in a "main" direction, indicated by the beam pattern axis. The number of sectors supported by a base station may vary, according to implementation chosen by a network provider. It will typically be desirable for a base station to provide 360 degree radio coverage extending fully around the base station. It will be appreciated that radio beams supported by a base station will typically be arranged to radiate from that base station in a generally horizontal manner. That beam may be directed towards users in a geographical region and, as a result, the "generally horizontal" beam may be tilted towards the ground, rather than towards the sky.

Although aspects have been described in relation to macro base stations, it will be appreciated that a small cell base station, such as a femto, pico, or home cell base station, may also be operable to support radio coverage regions in such a manner.

The regions of coverage provided by the first and second beams generally coincide across a geographical region, and typically overlap.

According to one embodiment, the second region of radio coverage comprises a plurality of angularly spaced second radio beams. Accordingly, the second region of coverage may also extend around a portion of the 360 degrees around a base station. The second region may, for example, extend fully around the base station. The second region may offer an alternative frequency across the same region as the first frequency. That is to say, the geographical regions covered by first and second frequencies may be congruent.

According to one embodiment, each of the angularly spaced second radio beams is arranged to radiate from the base station between adjacent angularly spaced first radio beams. Accordingly, between each pair of first radio beams, there may be arranged at least one second radio beam.

According to one embodiment, the second radio beam is arranged to radiate from the base station to bisect an angle between adjacent angularly spaced first radio beams. Accordingly, the second beam may be provided mid-way between two first beams, thereby ensuring that a region of poor signal to interference ratio experienced on the first frequency is likely to experience high signal to interference ratio on the second frequency.

According to one embodiment, the base station supports an identical number of first and second radio beams. Accordingly, a multi-sector base station may provide the same number of sectors on both the first and second frequency.

According to one embodiment, the transmission apparatus is operable to provide a third region of radio coverage on a third radio frequency, the third radio beam being arranged to radiate from the base station between adjacent angularly spaced first radio beams. It will be appreciated that although aspects are described in relation to a two frequency implementation, it is possible to extend the technique to three or more frequencies radiating from a single base station. In each case, each additional region of radio coverage is off-set in relation to the other regions of radio coverage provided on other frequencies. Embodiments and aspects described in relation to a second region and second frequency may also be implemented in respect of a third (or further) region and frequency, if available.

According to one embodiment, the transmission apparatus comprises a first antenna operable to transmit at least one of the angularly spaced first radio beams, and a second antenna operable to transmit the second radio beam. Accordingly, each of the first and second beams may be supported by its own antenna.

According to one embodiment, least one of the first and second antenna comprises an antenna column. Accordingly, the antenna supporting transmission of each first or second radio beam may be an antenna column.

According to one embodiment, at least one of the first and second antenna comprises an antenna array. Accordingly, the antenna supporting transmission of each or both of the first or second radio beam may be an antenna array.

According to one embodiment, the first and second antenna are physically angled with respect to one another. Accordingly, the angular offset of beams radiating from a base station may be achieved via physical alignment or positioning of one or more antennas on a base station.

According to one embodiment, at least one of the first and second antenna comprises an antenna array operable to form at least one of the first and second beams by beam forming techniques. Accordingly, rather than radially offsetting one beam with respect to another by physically tilting or arranging an antenna, it may be possible for one or both of the first and second beams to be radially offset by appropriate implementation of beam forming techniques.

According to one embodiment, the first and second antenna comprise a single antenna array operable to form at least one of the first and at least one of the second beams. Accordingly, a single antenna array may support both a first and second beam by employing appropriate beam forming techniques.

According to one embodiment, the first and second radio frequencies comprise different radio carriers. Accordingly, the technique may be used in, for example, GSM or WCDMA networks. A carrier will typically comprise a band of radio frequency.

According to one embodiment, the first and second radio frequencies lie within a single radio carrier. Accordingly, it will be appreciated that sub-bands of radio frequency may be used to support first and second radio regions. According to one embodiment, the first and second radio frequencies comprise at least one sub-carrier within a single radio carrier.

A second aspect provides a method of providing a region of radio coverage within a wireless telecommunication network, the method comprising: providing a first region of radio coverage on a first radio frequency and a second region of radio coverage on a second radio frequency, the first region of radio coverage comprising a plurality of angularly spaced first radio beams; the second region of radio coverage comprising at least a second radio beam; and arranging the second radio beam to radiate from a base station between adjacent angularly spaced first radio beams.

According to one embodiment, the second region of radio coverage comprises a plurality of angularly spaced second radio beams.

According to one embodiment, each of the angularly spaced second radio beams is arranged to radiate from the base station between adjacent angularly spaced first radio beams.

According to one embodiment, the second radio beam is arranged to radiate from the base station to bisect an angle between adjacent angularly spaced first radio beams.

According to one embodiment, the method comprises supporting an identical number of first and second radio beams.

According to one embodiment, the method comprises providing a third region of radio coverage on a third radio frequency, the third radio beam being arranged to radiate from a base station between adjacent angularly spaced first radio beams.

According to one embodiment, the method comprises providing a first antenna operable to transmit at least one of the angularly spaced first radio beams, and a second antenna operable to transmit the second radio beam.

According to one embodiment, at least one of the first and second antenna comprises an antenna column.

According to one embodiment, at least one of the first and second antenna comprises an antenna array.

According to one embodiment, at least one of the first and second antenna are physically angled with respect to one another.

According to one embodiment, at least one of the first and second antenna comprises an antenna array operable to form at least one of the first and second beams by beam forming techniques.

According to one embodiment, at least one of the first and second antenna comprise a single antenna array operable to form at least one of said first and at least one of said second beams.

According to one embodiment, the first and second radio frequencies comprise different radio carriers.

According to one embodiment, the first and second radio frequencies lie within a single radio carrier.

According to one embodiment, the first and second radio frequencies comprise at least one sub-carrier within a single radio carrier.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings in which:
Figure 1 illustrates the main components of a telecommunications network according to one embodiment;
Figure 2 illustrates a signal to interference and noise ratio distribution of a typical three sector macro cell network;
Figure 3 illustrates schematically traditional and alternative single multi-carrier base station set-ups for a base station having three sectors;
Figure 4 illustrates schematically a multi-cell set-up in both a traditional and alternative cell configuration;
Figure 5 illustrates schematically two antenna implementation approaches according to some embodiments; and
Figure 6 illustrates schematically an offset antenna pattern using a three column array;
Figure 7 illustrates schematically a performance comparison between a traditional set-up and an alternative base station configuration.

### DESCRIPTION OF THE EMBODIMENTS

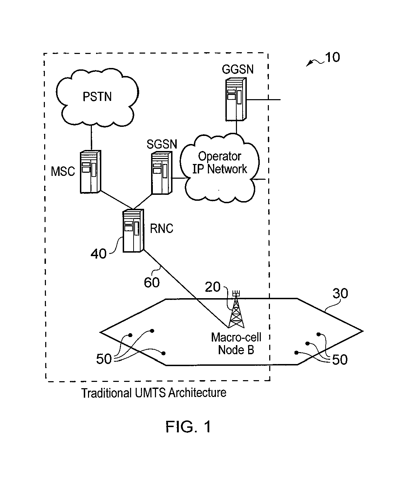

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small subset of a total number of user equipment and base stations that may be present in a typical communication system.

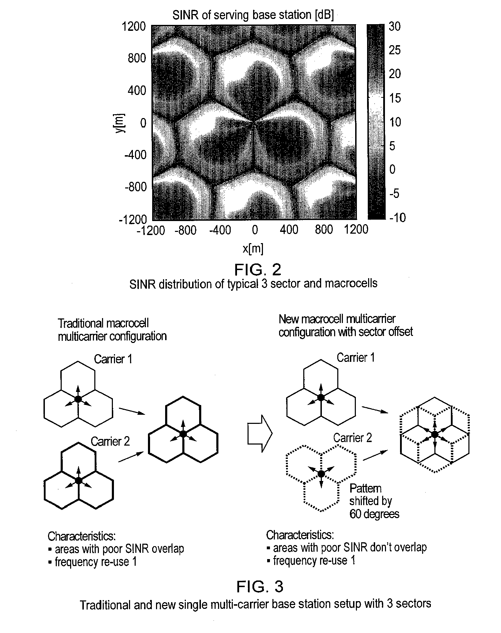

One issue in cellular networks is an uneven distribution of signal to interference and noise ratio across a cell. Cells are supported by base stations in a manner which leads to very high data rates being achievable in a cell centre, but very poor data rates at a cell edge and between sectors of a cell. Figure 2 illustrates the signal to interference and noise distribution of a typical three sector cell being supported by a base station and a series of adjacent base stations being provided across a geographical area. Poor signal to noise and interference ratios resulting in poor data rates at the cell edge and between sectors are shown as blue-green areas, and form a generally hexagonal pattern.

The interference issue can be addressed in LTE by coordinating interference such that parts of available sub-carriers are reserved for edge users, thereby increasing the available signal to interference and noise ratio for those edge users. One drawback of such an arrangement is that it reduces frequency re-use within a wireless communication network and thus may act to sacrifice overall network capacity. Another way to increase cell edge rates would be to incorporate static frequency planning when configuring a network and arranging to use different carriers in neighbouring cells. In this way, the cell edge signal to interference and noise ratios may be improved by planning frequencies in a way that neighbouring cells use different carriers. Such an approach may typically be used in GSM networks. Such an arrangement typically reduces frequency re-use factor and can lead to a low spectral efficiency across a given geographical area.

In flexible systems such as LTE interference may be coordinated. Such coordination typically offers a more dynamic interference mitigation approach compared to static frequency planning. By reserving part of the spectrum for cell edge users and by incorporating clever scheduling in network operation, the overall operation of a network may be enhanced by giving up some overall capacity. By reserving part of the spectrum it will be understood that a lower frequency re-use factor is employed and overall cell performance is sacrificed for the benefit of edge users. It will be appreciated however, that interference coordination methods may not be used in some network architectures such as UMTS and CDMA 2000.

Some networks are operable to perform in a multiple input multiple output (MIMO) manner and thus joint transmissions of multiple base stations add up at an end user in a constructive way such that signal to interference and noise ratio is maximised. According to such methods, transmissions on two bands of frequency may be employed, and typically two or more antennas may be required to support appropriate transmissions in each sector of a base station.

Before describing particular embodiments in detail, a general overview will be provided. Aspects described herein recognise that if multiple carriers are available at a base station, which is the case in most areas and for most operators, an alternative cell configuration may be implemented which may significantly improve cell edge data rates and overall data rates.

For a three sector macro cell, aspects provide a second carrier, the sectors of which are shifted such that they point towards an area of poor performance in a first carrier, for example, those sectors are radially shifted so that they radiate "between" sectors of the first carrier. In the case of a three sector macro cell, it may be, for example, that main beams, or beam patterns, supporting the sectors of radio coverage on the second carrier are shifted by 60° with respect to the beam patterns supporting the sectors of coverage on the first carrier. Such a shift in sectors may require modified antennas, but the cost increase is small compared to resulting benefits. As a result of shifting the beam pattern of a second carrier in relation to a first carrier, regions of poor signal to interference and noise ratio, both between the sectors and at cell edges of a particular base station, are arranged such that they are no longer co-located in comparison to a typical co-located carrier deployment. In other words, the regions of poor coverage in each carrier no longer overlap.

It will be appreciated that user equipment, for example, mobile telephones, operate such that they are typically supported, by handover, or camping procedures, to a best available carrier in any given geographical location. That is to say, the carrier which the user equipment sees as having the highest signal to interference and noise ratio or the highest received power at the user equipment is seen as being the most attractive for service. Providing a second carrier which is arranged so that it offers a higher signal to interference and noise ratio than a first carrier in some regions of a cell can lead to a significant increase in user data rates, particularly at cell edges, without reducing frequency re-use factor which remains at complete re-use.

The general principle may be extended to any number of sectors and any number of carriers or sub-carriers and may be generally applicable to different network provision protocols and air interfaces such as UMTS, CDMA and LTE.

Figure 3 illustrates both a traditional base station configuration and a multi-carrier base station set-up according to aspects described herein. In the scenarios illustrated schematically in Figure 3, two carriers are provided. Each carrier provides coverage to a geographical area in three sectors. In the traditional implementation shown on the left-hand side of Figure 3, carriers 1 and 2 are provided such that their beam patterns are substantially collocated, and directed in substantially identical directions, leading to an overall multi carrier configuration in which areas of poor signal to noise and interference ratio are experienced on both carriers in substantially the same geographic locations. Namely: between sectors and at the base station cell edge.

On the right-hand side of Figure 3 an alternative configuration of carriers is illustrated schematically. In this scenario, the main beam supporting each sector of carrier 1 is offset in relation to the main beam supporting each sector of the second carrier. That is to say, as illustrated in Figure 3, the beam pattern of carrier 2 is shifted by 60° in relation to the beam pattern supported on carrier 1. The sectors are therefore offset with respect to one another. It will, however, be appreciated that sectors are merely a simplified construct when considering base station coverage geometry and that each sector is supported by a main beam radiating from a base station as part of a more complex beam pattern.

Because of the relative sector offset of aspects described herein, areas with poor signal to interference and noise ratio experienced on a first carrier and a second carrier tend to overlap less than in a traditional arrangement whilst full frequency re-use across adjacent base stations and cells within a network is enabled.

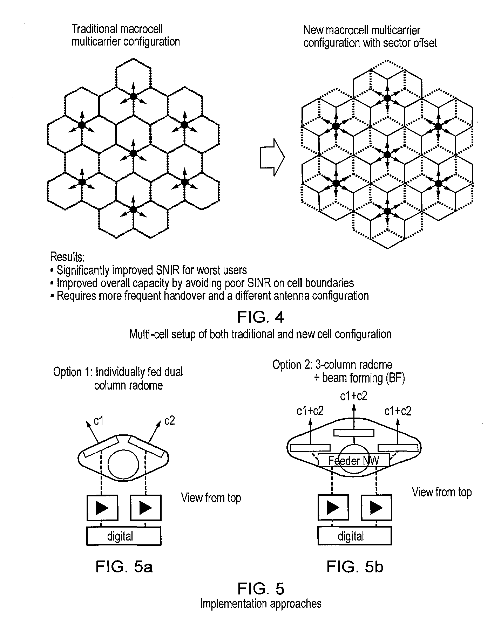

Figure 4 illustrates schematically network setup according to an embodiment, that network comprising a plurality of base stations, each supporting cells of radio coverage. As a result of providing each base station shown in Figure 4 with two carriers and as a result of offsetting the beam pattern of the second carrier with respect to the first at each base station, a resulting region of radio coverage may be provided within a network which provides a significant improvement in signal to interference and noise ratio for those users at cell edges and provides an improved overall network capacity by avoiding poor signal to interference and noise ratio in relation to cell and sector boundaries. It will be appreciated that such an arrangement may require more frequent handover or cell selection processes to occur within a network, both intra-cell between cells supported by a single base station and inter-cell between cells supported by different base stations. It will also be appreciated that aspects described herein typically require a new antenna configuration in order to provide such a multi carrier configuration having sector offsets at each base station.

It will be appreciated that to achieve different carrier offset patterns for different carriers, antenna systems provided on a base station and the RF stage of a base station may need appropriate modification. There are various ways in which to achieve the required carrier offset patterns.

Figure 5 illustrates schematically two possible implementation approaches.

One option is that the beam patterns for each sector may be achieved using a radome including two angled individually fed antenna columns, one provided for each carrier. In such an arrangement, two signals (one for each carrier) are required and two RF paths are required. Each RF path needs only to provide half of the power in comparison to an arrangement which uses one amplifier to support both bands.

Furthermore, it will be appreciated that some possible antenna array arrangements may already integrate separate RF paths for each antenna element and those may be digitally fed. That is to say, an existing antenna array may be able to support the proposed scheme of providing a different or offset beam pattern for each carrier in a sector. It will be further appreciated that for LTE and 4G networks, multiple RF paths will typically be required to support standardised MIMO schemes.

Figure 5 also illustrates schematically an implementation in which different patterns for each carrier are provided via a beam-forming approach using a multi column array. Compared to the first implementation, two broadband RF stages may be used, each at half power. In addition, a feeder network is required at the antenna to feed each of the four columns.

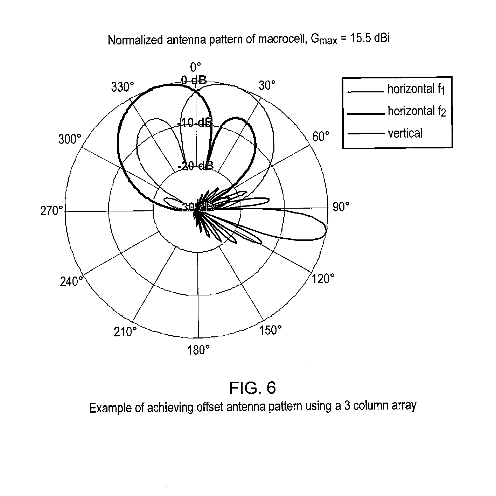

Figure 6 illustrates schematically an offset antenna pattern which may be achieved using a three column array such as that shown schematically in Figure 5. It can be seen that the beams formed by the three column array are substantially offset with respect to one another and, in the case illustrated, that offset is of the region of 60°.

It will be understood that each of the implementation approaches illustrated schematically in Figure 5 may fit into standard radome sizes and thus do not increase the visual impact of a base station antenna system.

### PERFORMANCE COMPARISON

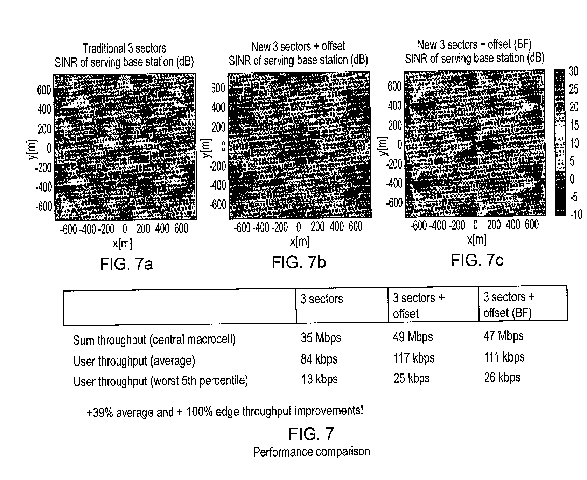

A performance comparison using simulations between a traditional three sector set-up and aspects described herein using the two different antenna configurations described in relation to Figure 5 is illustrated in Figure 7. The results table shown in Figure 7 relates to implementations which deploy two carriers.

The signal to interference and noise ratio distribution patterns shown in the upper part of Figure 7 illustrate clear advantages and improvements in experienced edge signal to interference and noise ratios in relation to the new sector arrangement in comparison to a traditional arrangement.

Figure 7a illustrates the signal to noise and interference ratio experienced in a traditional three sector base station arrangement.

Figure 7b illustrates the signal to interference and noise ratio experienced when using three sectors, each having an offset and having individually fed dual column radomes similar to those shown in Figure 5a.

Figure 7c illustrates the resulting signal to noise and interference ratio pattern caused by base stations running three new sectors at an offset, according to a three column radome using beam-forming methods such as those shown schematically in Figure 5b.

The table of Figure 7 compares various performance indicators across the three potential arrangements. It can be seen that the signal to interference and noise ratio distribution of the new schemes have clear advantages, particularly when dealing with edge signal to interference and noise ratios. Those advantages can result in 100% improvement of the worst fifth percentile of users and also increases overall data rate by approximately 39% compared to a traditional three sector set-up using two carriers. It also shows that either antenna implementation; that is to say, individually fed dual core radomes or a beam-forming approach may be implemented and achieve a similar performance improvement.

Aspects described herein may be used in conjunction with multi frequency, multi standard antenna devices which can be mounted anywhere there is a power and broadband connection.

The concept described in relation to the Figures may, of course, be extended to a base station supporting any number of sectors. For example, a six sector cell may be set up on each available carrier and the offset of carriers on a second carrier may be such that it is 30° in relation to the beams formed on the first carrier. For irregularly pointed sectors (that is to say, ones for which the beam pattern is not clean), the antennas of the second carrier may be arranged to form a beam which points in the direction of the worst signal to interference and noise ratio between two adjacent sectors provided on carrier 1.

It will be appreciated that instead of using different carriers, in some network architectures, for example, LTE, the concept may be applied to sub-carriers within a single carrier. For example, in an LTE deployment, half of the sub-carriers of a band may be transmitted as usual and a proportion or the remaining half may be transmitted with appropriate offset. In such a case, the network scheduling would automatically assign users to the best available sub-carriers based on channel feedback without the need for handovers and measurements on other carriers.

It will be appreciated that the offset concept may be used when beams are formed dynamically; for example, in a circular antenna array. Here, users are allocated to carriers in such a way that the described beam configuration where a carrier or sub-carrier points in the direction of the re-use boundaries results in high interference of the other carriers or sub-carriers. This overcomes the physical limitation of poor signal to interference and noise ratio between beams, whilst allowing spectral re-use of one.

An offset approach as described herein has significant advantages over a traditional three sector two carrier deployment. In particular, simulations show that the offset approach may offer a 100% improvement in the worst fifth percentile of users and a 39% improvement in macro cell capacity. It diminishes a poor signal to interference and noise ratio region between sectors whilst maintaining full frequency re-use. It also improves edge signal to interference and noise ratio whilst maintaining full frequency re-use.
However, the offset approach may not be without some disadvantages, namely in some network architectures it may result in an increased number of handovers and may typically require an increased cost for the provision of additional antennas.

It will be understood that aspects described provide a novel method for configuring sectors in a multi-carrier cellular network. Such an approach minimises or removes a poor signal to interference and noise ratio region between sectors and acts to significantly improve edge signal to interference and noise ratio whilst maintaining full frequency re-use. The concept is also applicable to OFDM systems such as LTE. In such systems, instead of multiple carriers groups of sub-carriers can be used and offset with respect to one another. In those scenarios it will be understood that a scheduler may operate to take care of optimal frequency allocation based on signal to interference and noise ratio maximisation and no inter-carrier handovers are required.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunication base station operable to provide a region of radio coverage within a wireless telecommunication network, said base station comprising:
transmission apparatus operable to provide a first region of radio coverage on a first radio frequency and a second region of radio coverage on a second radio frequency, said first region of radio coverage comprising a plurality of angularly spaced first radio beams; said second region of radio coverage comprising at least a second radio beam;
said second radio beam being arranged to radiate from said base station between adjacent angularly spaced first radio beams.

2. A wireless telecommunication base station according to claim 1, wherein said second region of radio coverage comprises a plurality of angularly spaced second radio beams.

3. A wireless telecommunication base station according to claim 2, wherein each of said angularly spaced second radio beams is arranged to radiate from said base station between adjacent angularly spaced first radio beams.

4. A wireless telecommunication base station according to any preceding claim, wherein said second radio beam is arranged to radiate from said base station to bisect an angle between adjacent angularly spaced first radio beams.

5. A wireless telecommunication base station according to any one of claims 2 to 4, wherein said base station supports an identical number of first and second radio beams.

6. A wireless telecommunication base station according to any preceding claim, wherein said transmission apparatus is operable to provide a third region of radio coverage on a third radio frequency, said third radio beam being arranged to radiate from said base station between adjacent angularly spaced first radio beams.

7. A wireless telecommunication base station according to any preceding claim, wherein said transmission apparatus comprises a first antenna operable to transmit at least one of said angularly spaced first radio beams, and a second antenna operable to transmit said second radio beam.

8. A wireless telecommunication base station according to claim 7, wherein at least one of said first and second antenna comprises an antenna column.

9. A wireless telecommunication base station according to claim 7 or claim 8, wherein at least one of said first and second antenna comprises an antenna array.

10. A wireless telecommunication base station according to any one of claims 7 to 9, wherein said first and second antenna are physically angled with respect to one another.

11. A wireless telecommunication base station according to any one of claims 7 to 10, wherein at least one of said first and second antenna comprises an antenna array operable to form at least one of said first and second beams by beam forming techniques.

12. A wireless telecommunication base station according to claim 7, wherein said first and second antenna comprise a single antenna array operable to form at least one of said first and at least one of said second beams.

13. A wireless telecommunication base station according to any preceding claim, wherein said first and second radio frequencies comprise different radio carriers.

14. A wireless telecommunication base station according to any one of claims 1 to 12, wherein said first and second radio frequencies comprise at least one sub-carrier within a single radio carrier.

15. A method of providing a region of radio coverage within a wireless telecommunication network, said method comprising:
providing a first region of radio coverage on a first radio frequency and a second region of radio coverage on a second radio frequency, said first region of radio coverage comprising a plurality of angularly spaced first radio beams; said second region of radio coverage comprising at least a second radio beam;
and arranging said second radio beam to radiate from said base station between adjacent angularly spaced first radio beams.
